# EUROPEAN PATENT SPECIFICATION

(11) **EP 3 059 466 B1**
(45) Date of publication and mention of the grant of the patent: **29.01.2020**
(21) Application number: 16156377.0
(22) Date of filing: 18.02.2016
(51) Int. Cl.: F16D 65/092, F16D 69/04

(54) **PAD FOR DISC BRAKES FOR RAILWAY VEHICLES**
BELAG FÜR SCHEIBENBREMSEN FÜR SCHIENENFAHRZEUGE
PLAQUETTE DE FREINS À DISQUE POUR VÉHICULES FERROVIAIRES

(30) Priority: 18.02.2015 IT RM20150074
(43) Date of publication of application: 24.08.2016
(73) Proprietor: Cofren S.r.L., 83100 Avellino (IT)
(72) Inventor: DE SOCCIO, Vittorio, 82100 Benevento (IT)
(74) Representative: Bosman, Cesare

(56) References cited:
- EP-A1- 2 119 934
- EP-A1- 2 716 929
- EP-A2- 2 320 106
- WO-A1-2011/111822
- WO-A1-2014/121703
- WO-A1-2014/121704
- CN-A- 102 705 405
- CN-A- 102 748 417

## Description

The present invention relates to a pad for disc brakes for railway vehicles, as for instance known from EP-A-2 320 106.

As already known, disc brakes are subject to very considerable stresses and a good transmission of the braking force from the pad to the disc is necessary to obtain an optimal braking action.

For some time now, the trend has been using pads carrying a plurality of small size friction elements rather than using a single friction element of larger size. One of the solutions adopted to this respect provides that each pad is formed by a main base plate, by a plurality of support plates fixed to the base plate and by a plurality of friction elements, fixed individually or in pairs on the respective support plates.

Besides exerting an effective braking pressure on the disc, the pads in question must that also ensure a low noise level during the braking action. A low noise level is an increasingly discriminant element in the choice of disc brakes.

As it is clear to a person skilled in the art, the above requirements are closely associated with the methods with which the friction elements exert pressure on the disc.

Recent solutions involve the use of a plurality of elastic elements, each of them being arranged between the base plate and a respective support plate. However, in spite of having already significantly reduced the braking noise, there is still a need for even more effective solutions in this field, due to the complexity of the present solutions and to an increasing demand for noise reduction.

The applicant has implemented a particular pad solution whose technical characteristics ensure a high braking efficiency together with a low noise level and a simple manufacture.

The object of the present invention is a pad for disc brakes for railway vehicles whose essential characteristics are set forth in claim 1, and whose preferred and/or auxiliary characteristics are set forth in claims 2-8.

For a better understanding of the invention, a purely illustrative and non-limiting exemplary embodiment is described below with the aid of the accompanying figures, in which:
Figure 1 is a front view with transparent parts of the pad of the present invention;
Figure 2 is a back view with transparent parts of the pad of Figure 1;
Figure 3a is a section along the line III-III of Figure 1 with cut-away parts of a first assembly mode;
Figure 3b is a section along the line III-III of Figure 1 with cut-away parts of a second assembly mode;
Figure 3c is a section along the line III-III of Figure 1 with cut-away parts of a third assembly mode;
Figure 4 is a plan view of an element of the pad of Figure 1;
Figure 5 is a section along the line V-V of Figure 4;

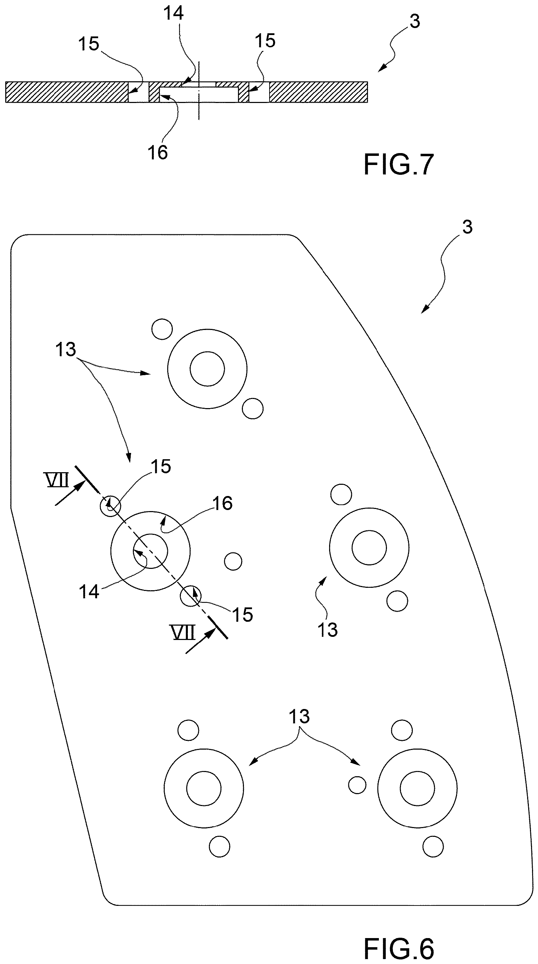

Figure 6 is a plan view of a further element of the pad of Figure 1;
Figure 7 is a section along the line VII-VII of Figure 6;
Figure 8 is a plan view of a further element of the pad of Figure 1;
Figure 9 is a section along the line IX-IX of Figure 8.

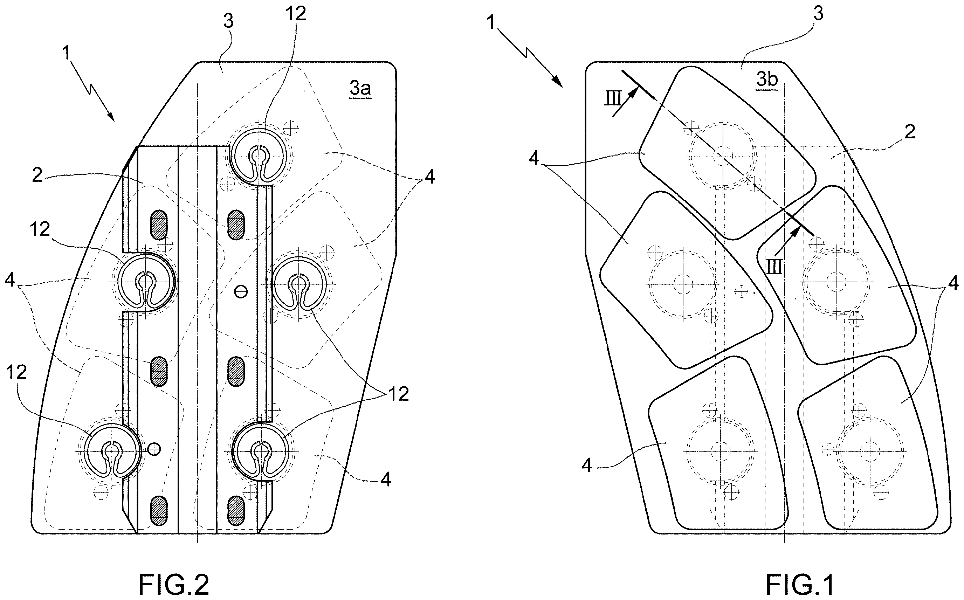

Figures 1 and 2 indicate with 1 as a whole a pad of the present invention.

The pad 1 comprises a "dovetail" fixing plate 2 for fixing the pad 1 to a disc brake structure, a base plate 3 reversibly fixed to the fixing plate 2, and a plurality of friction elements 4 directly and reversibly fixed to the base plate 3.

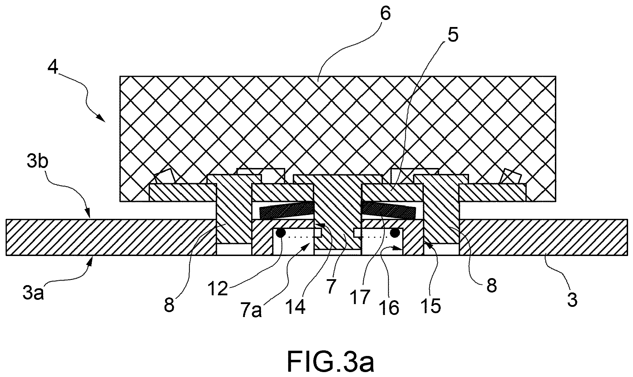

As shown in Figures 3a-3c, each friction element 4 is composed of a planar lamina 5, an insert 6 made of friction material and irreversibly fastened to the planar lamina 5, a fixing pin 7 and two anti-rotation pegs 8.

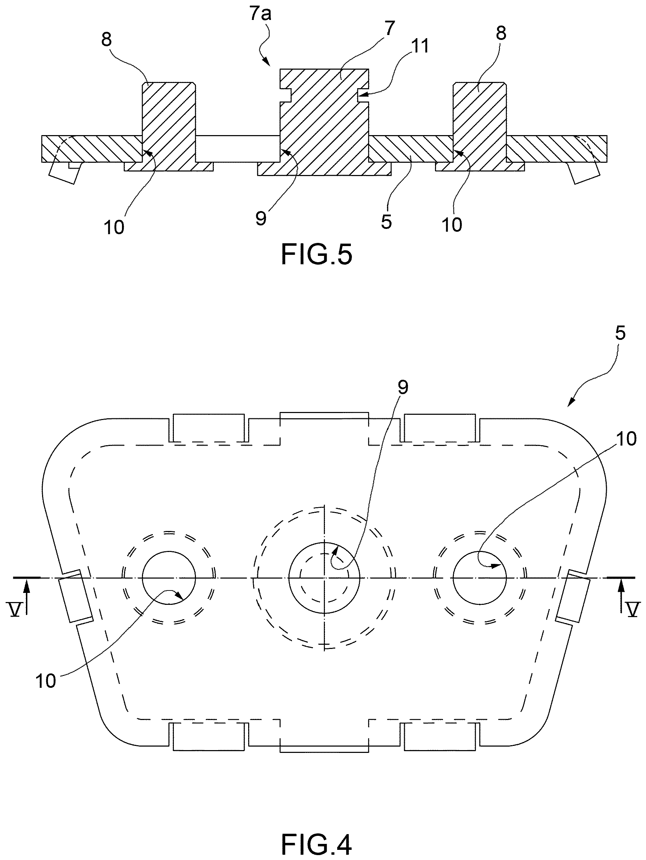

In particular, as shown in Figures 4 and 5, the planar lamina 5 has a central hole 9 engaged by the fixing pin 7 and two side holes 10, each of them being engaged by a respective anti-rotation peg 8.

Once that the friction element 4 is assembled, the heads of the fixing pin 7 and of the anti-rotation pegs 8 are buried in the friction material of the insert 6.

The fixing pin 7 has, at its free end 7a, a circumferential groove 11 to be engaged by a locking spring 12 as described hereinafter.

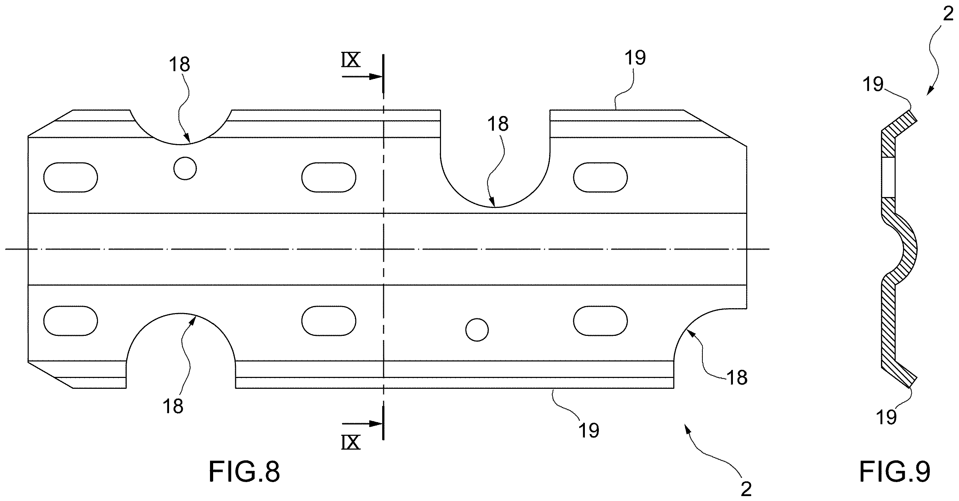

As shown in Figure 8, five series 13 of three through holes are formed on the base plate 3, each of them being responsible for reversibly fixing a respective friction element 4 and having a central hole 14 and two side holes 15. The central hole 14 has a larger diameter than the side holes 15 and is formed in the middle of a respective circular recess 16 formed, in turn, on a lower surface 3a of the base plate 3. As described hereinafter, the circular recess 16 houses the locking spring 12.

Figures 3a-3c show three different assembly modes of the pad 1 according to the present invention. In each assembly mode, the fixing pin 7 engages the central hole 14, while each of the two anti-rotation pegs 8 engages a respective side hole 15. The fixing pin 7 is arranged with its free end 7a inside the circular recess 16, where it is blocked by the locking spring 12 engaging the circumferential groove 11.

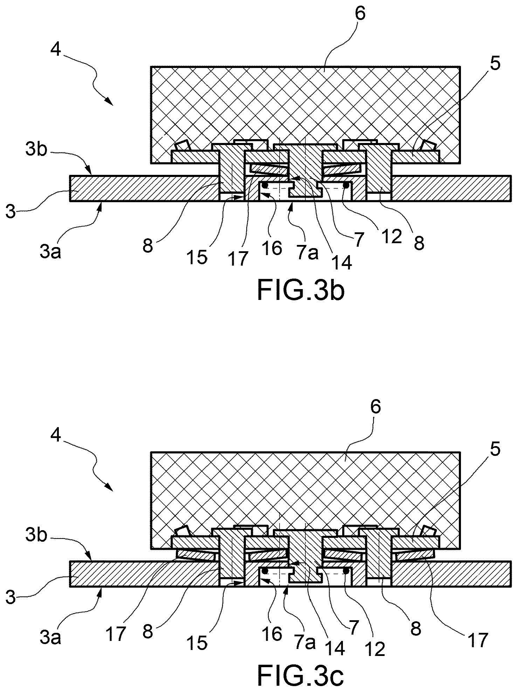

The difference among the three assembly modes respectively shown in Figures 3a-3c is the different positioning of the Belleville washers 17 and their number. In particular,
- the assembly of Figure 3a provides a Belleville washer 17 arranged around the fixing pin 7 and interposed between the friction element 4 and an upper surface 3b of the base plate. The Belleville washer 17 is arranged with its circular edge having a smaller diameter in abutment on the planar lamina 5 and with its circular edge having a larger diameter in abutment on the base plate 3;
- the assembly of Figure 3b differs from the assembly of Figure 3a for the reversed arrangement of the Belleville washer 17. In fact, also in this case the Belleville washer 17 is arranged around the fixing pin 7, but it is arranged with the its circular edge having a smaller diameter in abutment on the base plate 3 and with its circular edge having a larger diameter in abutment on the planar lamina 5;
- the assembly of Figure 3c differs from the assembly of Figures 3a and 3b both for the number of Belleville washers and for their position. In fact, the assembly of Figure 3c involves the use of two Belleville washers 17, each of them arranged around a respective anti-rotation peg 15. Each Belleville washer 17 is arranged with its circular edge having a smaller diameter in abutment on the planar lamina 5 and with its circular edge having a larger diameter in abutment on the base plate 3.

In the resting stage, the Belleville washer (or washers) 17 pushes the planar lamina 5 of the friction element 4 away from the upper surface 3b of the base plate 3.

Each of the Belleville washers in the pad of the present invention provides a dual kind of movements of the friction elements 4: (a) a movement along a plane perpendicular to the base plate 3 and (b) a pivoting movement about a symmetry axis of the Belleville washer 17. These two combined movements of the friction elements 4 improve the mode with which the inserts 6 exert a pressure on the disc with regard to braking effectiveness and noise level.

Another advantage of the present invention relates to the simplification of the components and, therefore, the assembly of the pad as a whole. Unlike the prior art pads, the pad of the present invention does not require support plates supporting the friction elements and fixed to the base plate. In fact, in the prior art pads, the elastic element is generally interposed between a respective support plate and the base plate, and is structured so as to ensure the elasticity only along a plane perpendicular to the base plate.

In other words, the technical characteristics of the pad of the present invention ensure, if compared with those of the prior art, a more efficient and less noisy braking action as well as a higher productivity due to a smaller number of components and, therefore, a simplification of the assembly operations.

Furthermore, as shown in Figure 8, the fixing plate 2 has a plurality of side recesses 18 formed along its two side edges 19. As shown in Figure 2, the presence of the side recesses 18 allows a free access to the locking springs 12, even when the pad is fully assembled. In this way, the friction elements 4 of the assembled pad can be easily replaced.

In short, the advantages of the pad for disc brakes object of the present invention are a structural simplicity (smaller number of pieces) combined with a lower noise level and a greater braking efficiency.

## Claims

1. A pad (1) for disc brakes for railway vehicles comprising a fixing plate (2) to fix the pad, as a whole, to a disc brake structure, a base plate (3) and a plurality of friction elements (4) which are directly reversibly fixed on said base plate (3); each of said friction elements (4) comprising a planar lamina (5), an insert (6) made of friction material and irreversibly fixed to the planar lamina (5), a fixing pin (7) engaging a respective fixing hole (14) formed in said base plate (3) and a pair of anti-rotation pegs (8) engaging a respective pair of holes (15) formed in said base plate (3) and arranged on opposite sides with respect to said fixing pin (7); said pad being **characterized by** comprising, for each friction element (4), at least a Belleville washer (17) arranged between said planar lamina (5) and said base plate (3) and in that said fixing pin (7) has, at its free end (7a), a circumferential groove (11), which is engaged by a locking spring (12); each fixing hole (14) being formed in the middle of a circular recess (16) wherein the circumferential groove (11) of said fixing pin (7) and said locking spring are arranged.

2. A pad for disc brakes according to claim 1, **characterized in that** said Belleville washer (17) is arranged around said fixing pin (7).

3. A pad for disc brakes according to claim 2, **characterized in that** said Belleville washer (17) is arranged with its edge having a larger diameter in abutment on said base plate (3) and with its edge having a smaller diameter in abutment on said planar lamina (5).

4. A pad for disc brakes according to claim 2, **characterized in that** said Belleville washer (17) is arranged with its edge having a larger diameter in abutment on said planar lamina (5) and with its edge having a smaller diameter in abutment on said base plate (3).

5. A pad for disc brakes according to claim 1, **characterized in that** it comprises for each friction element (4) a pair of said Belleville washers (17), each of them being arranged around a respective anti-rotation peg (8).

6. A pad for disc brakes according to claim 5, **characterized in that** said Belleville washers (17) are arranged with their edge having a larger diameter in abutment on said base plate (3) and with their edge having a smaller diameter in abutment on said planar lamina (5).

7. A pad for disc brakes according to claim 5, **characterized in that** said Belleville washers (17) are arranged with their edge having a larger diameter in abutment on said planar lamina (5) and with their edge having a smaller diameter in abutment on said base plate (3).

8. A pad for disc brakes according to any one of claims 1-7, **characterized in that** in each of said friction elements (4) said fixing pin (7) engages a respective hole (9) formed in said planar lamina (5), and said two anti-rotation pegs (8) engage respective holes (10) formed in said planar lamina (5); respective heads of said fixing pin (7) and of said anti-rotation pegs (8) being buried in said insert(6) made of a friction material.

## Patentansprüche

1. Scheibenbremsbelag (1) für Schienenfahrzeuge, der eine Befestigungsplatte (2) zum Befestigen des Bremsbelags als Ganzes an einer Scheibenbremsenstruktur, eine Grundplatte (3) und mehrere Reibungselemente (4) aufweist, die direkt reversibel an der Grundplatte (3) befestigt sind;
wobei jedes der Reibungselemente (4) eine ebene Schicht (5), einen Einsatz (6) aus einem Reibungsmaterial, der irreversibel an der ebenen Schicht (5) befestigt ist, einen Befestigungsstift (7), der in ein entsprechendes Befestigungsloch (14) eingreift, das in der Grundplatte (3) ausgebildet ist, und ein Paar Verdrehsicherungsstifte (8) aufweist, die in ein jeweiliges Paar von Löchern (15) eingreifen, die in der Grundplatte (3) ausgebildet und in Bezug auf den Befestigungsstift (7) an gegenüberliegenden Seiten angeordnet sind;
wobei der Bremsbelag **dadurch gekennzeichnet, ist, dass**
er für jedes Reibungselement (4) mindestens eine Tellerfeder (17) aufweist, die zwischen der ebenen Schicht (5) und der Grundplatte (3) angeordnet ist, und
dass der Befestigungsstift (7) an seinem freien Ende (7a) eine Umfangsnut (11) aufweist, mit der eine Verriegelungsfeder (12) in Eingriff steht; wobei jedes Befestigungsloch (14) in der Mitte einer kreisförmigen Vertiefung (16) ausgebildet ist, in der die Umfangsnut (11) des Befestigungsstiftes (7) und die Verriegelungsfeder angeordnet sind.

2. Scheibenbremsbelag nach Anspruch 1, **dadurch gekennzeichnet, dass** die Tellerfeder (17) um den Befestigungsstift (7) herum angeordnet ist.

3. Scheibenbremsbelag nach Anspruch 2, **dadurch gekennzeichnet, dass** die Tellerfeder (17) derart angeordnet ist, dass ihr Rand mit einem größeren Durchmesser an der Grundplatte (3) anliegt und ihr Rand mit einem kleineren Durchmesser an der ebenen Schicht (5) anliegt.

4. Scheibenbremsbelag nach Anspruch 2, **dadurch gekennzeichnet, dass** die Tellerfeder (17) derart angeordnet ist, dass ihr Rand mit einem größeren Durchmesser an der ebenen Schicht (5) anliegt und ihr Rand mit einem kleineren Durchmesser an der Grundplatte (3) anliegt.

5. Scheibenbremsbelag nach Anspruch 1, **dadurch gekennzeichnet, dass** er für jedes Reibungselement (4) ein Paar der Tellerfedern (17) aufweist, die jeweils um einen entsprechenden Verdrehsicherungsstift (8) herum angeordnet sind.

6. Scheibenbremsbelag nach Anspruch 5, **dadurch gekennzeichnet, dass** die Tellerfedern (17) derart angeordnet sind, dass ihr Rand mit einem größeren Durchmesser an der Grundplatte (3) anliegt und ihr Rand mit einem kleineren Durchmesser an der ebenen Schicht (5) anliegt.

7. Scheibenbremsbelag nach Anspruch 5, **dadurch gekennzeichnet, dass** die Tellerfedern (17) derart angeordnet sind, dass ihr Rand mit einem größeren Durchmesser an der ebenen Schicht (5) anliegt und ihr Rand mit einem kleineren Durchmesser an der Grundplatte (3) anliegt.

8. Scheibenbremsbelag nach einem der Ansprüche 1 bis 7, **dadurch gekennzeichnet, dass** in jedem der Reibungselemente (4) der Befestigungsstift (7) in ein entsprechendes Loch (9) eingreift, das in der ebenen Schicht (5) ausgebildet ist, und die zwei Verdrehsicherungsstifte (8) in jeweilige Löcher (10) eingreifen, die in der ebenen Schicht (5) ausgebildet sind; wobei jeweilige Köpfe des Befestigungsstifts (7) und der Verdrehsicherungsstifte (8) in den Einsatz (6) aus einem Reibungsmaterial eingebettet sind.

## Revendications

1. Plaquette (1) de freins à disque pour véhicules ferroviaires comprenant une plaque de fixation (2) pour fixer la plaquette, dans son ensemble, à une structure de frein à disque, une plaque de base (3) et une pluralité d'éléments de friction (4) qui sont fixés directement de manière réversible sur ladite plaque de base (3) ; chacun desdits éléments de friction (4) comprenant une lame plane (5), un insert (6) réalisé avec un matériau de friction et fixé de manière irréversible sur la lame plane (5), une broche de fixation (7) mettant en prise un trou de fixation (14) respectif formé dans ladite plaque de base (3) et une paire de chevilles anti-rotation (8) mettant en prise une paire respective de trous (15) formés dans ladite plaque de base (3) et agencés sur les côtés opposés par rapport à ladite broche de fixation (7) ; ladite plaquette étant **caractérisée en ce qu'**elle comprend, pour chaque élément de friction (4), au moins une rondelle Belleville (17) agencée entre ladite lame plane (5) et ladite plaque de base (3) et **en ce que** ladite broche de fixation (7) a, au niveau de son extrémité libre (7a), une rainure circonférentielle (11) qui est mise en prise par un ressort de blocage (12) ; chaque trou de fixation (14) étant formé au centre d'un évidement circulaire (16), dans laquelle la rainure circonférentielle (11) de ladite broche de fixation (7) et ledit ressort de blocage sont agencés.

2. Plaquette pour freins à disque selon la revendication 1, **caractérisée en ce que** ladite rondelle Belleville (17) est agencée autour de ladite broche de fixation (7).

3. Plaquette pour freins à disque selon la revendication 2, **caractérisée en ce que** ladite rondelle Belleville (17) est agencée avec son bord qui a un plus grand diamètre en butée sur ladite plaque de base (3) et avec son bord qui a un plus petit diamètre en butée sur ladite lame plane (5).

4. Plaquette pour freins à disque selon la revendication 2, **caractérisée en ce que** ladite rondelle Belleville (17) est agencée avec son bord qui a un plus grand diamètre en butée sur ladite lame plane (5) et avec son bord ayant un plus petit diamètre en butée sur ladite plaque de base (3).

5. Plaquette pour freins à disque selon la revendication 1, **caractérisée en ce qu'**elle comprend pour chaque élément de friction (4), une paire desdites rondelles Belleville (17), chacune d'entre elles étant agencée autour d'une cheville anti-rotation (8) respective.

6. Plaquette pour freins à disque selon la revendication 5, **caractérisée en ce que** lesdites rondelles Belleville (17) sont agencées avec leur bord qui a un plus grand diamètre en butée sur ladite plaque de base (3) et avec leur bord qui a un plus petit diamètre en butée sur ladite lame plane (5).

7. Plaquette pour freins à disque selon la revendication 5, **caractérisée en ce que** lesdites rondelles Belleville (17) sont agencées avec leur bord qui a un plus grand diamètre en butée sur ladite lame plane (5) et avec leur bord qui a un plus petit diamètre en butée sur ladite plaque de base (3).

8. Plaquette pour freins à disque selon l'une quelconque des revendications 1 à 7, **caractérisée en ce que** dans chacun desdits éléments de friction (4), ladite broche de fixation (7) met en prise un trou (9) respectif formé dans ladite lame plane (5), et lesdites deux chevilles anti-rotation (8) mettent en prise des trous (10) respectifs formés dans ladite lame plane (5) ; les têtes respectives de ladite broche de fixation (7) et desdites chevilles anti-rotation (8) étant enfoncées dans ledit insert (6) réalisé avec un matériau de friction.
